# EUROPÄISCHE PATENTSCHRIFT

(11) **EP 1 543 267 B1**
(45) Veröffentlichungstag und Bekanntmachung des Hinweises auf die Patenterteilung: **27.06.2007**
(21) Anmeldenummer: 03769303.3
(22) Anmeldetag: 23.09.2003
(51) Int. Cl.: F16L 37/092

(54) **ANSCHLUSSVORRICHTUNG FÜR ROHRLEITUNGEN**
CONNECTOR DEVICE FOR PIPES
DISPOSITIF DE RACCORDEMENT POUR CANALISATION

(30) Priorität: 24.09.2002 DE 20214847 U
(43) Veröffentlichungstag der Anmeldung: 22.06.2005
(73) Patentinhaber: Voss Automotive GmbH, 51688 Wipperfürth (DE)
(72) Erfinder: SALOMON-BAHLS, Bernd, 58553 Halver (DE)
(74) Vertreter: Zapf, Christoph
(86) Internationale Anmeldenummer: PCT/EP2003/010555
(87) Internationale Veröffentlichungsnummer: WO 2004/029497

(56) Entgegenhaltungen:
- EP-A- 1 199 506
- EP-B- 0 733 844
- US-A- 3 724 880
- US-A- 5 366 260

## Beschreibung

Die vorliegende Erfindung betrifft eine Anschlußvorrichtung zum Steckanschluß mindestens einer Rohrleitung (Rohr- oder Schlauchleitung für Gase oder Flüssigkeiten), bestehend aus einem Gehäuseteil mit mindestens einer Aufnahmeöffnung zum Einstecken der Rohrleitung sowie aus einem in der Aufnahmeöffnung angeordneten, geschlitzten und dadurch radial elastisch verformbaren Klemmring, der zum Arretieren der Rohrleitung über einen Außenkonus mit einem Innenkonus des Gehäuseteils zusammenwirkt, wobei das Gehäuseteil zweiteilig aus einem Basisteil und einem mit diesem über eine schnappbare Formschlußverbindung verbundenen, den Innenkonus aufweisenden Einsatzteil besteht und das Einsatzteil eine Schmutzdichtung zur umfangsgemäßen Anlage auf der eingesteckten Rohrleitung aufweist.

Eine solche Anschlußvorrichtung ist aus der EP 0 733 844 B1 bekannt. Dabei besteht das Einsatzteil aus einem einstückigen Kunststoff-Formteil, wobei eine Schmutzdichtung, die ein Eindringen von Staub, Schmutz, Feuchtigkeit (Spritzwasser) und dergleichen verhindern soll, als umlaufende Dichtlippe einstückig angeformt ist. Diese Dichtlippe erstreckt sich vor dem Einstecken der Rohrleitung derart in Einsteckrichtung schräg radial nach innen, dass sie durch die eingesteckte Rohrleitung etwas elastisch aufgeweitet wird und dann dichtend anliegend. Zum Zwecke der Lösbarkeit der Rohrleitung weist dabei das Einsatzteil zwei elastische Rastarme auf, die mit Rastansätzen in das Basisteil und in dort gebildete Rastöffnungen eingreifen. Jeder Rastarm weist einen aus dem Basisteil nach außen vorstehenden Betätigungsabschnitt auf. Diese bekannte Anschlußvorrichtung hat sich im Wesentlichen gut bewährt, allerdings ist insbesondere die Schmutzabdichtung noch nicht optimal. Zudem können die vorstehenden Betätigungsansätze, der Rastarme hinderlich sein oder sogar zu einem ungewollten Lösen führen.

Der vorliegenden Erfindung liegt die Aufgabe zugrunde, eine Anschlußvorrichtung der beschriebenen, gattungsgemäßen Art mit wirtschaftlichen Mitteln bezüglich ihrer Gebrauchseigenschaften weiter zu verbessern.

Erfindungsgemäß wird dies dadurch erreicht, dass das Einsatzteil aus einem ersten, relativ härteren und formstabilen Kunststoffmaterial besteht und die Schmutzdichtung unmittelbar einstückig materialschlüssig aus einem zweiten, relativ weicheren und elastischen Kunststoffmaterial angeformt ist. Durch diese vorteilhafte Ausgestaltung kann die Schmutzdichtung form- und/oder materialspezifisch für eine optimale Dichtfunktion ausgelegt sein. Beispielsweise kann ein optimal für die Dichtung geeignetes, weiches und elastisches Material verwendet werden, und es lassen sich auch günstige Formen, insbesondere wulstartige Ringquerschnitte realisieren, wodurch bei Auflage auf dem Umfang der Rohrleitung eine gute Dichtwirkung erzielt wird. Zudem läßt dies auch ein problemloses Einschieben und gegebenenfalls ein Herausziehen der Rohrleitung zu, weil es bei Wulstdichtungen im Gegensatz zu Lippendichtungen durch relative Schiebebewegungen nicht zu schädlichen Verformungen der Dichtung kommen kann. Das Einsatzteil selbst lässt sich durch Wahl eines geeigneten Materials für optimale mechanische Eigenschaften auslegen, was vor allem für die Abstützung des Klemmrings von Bedeutung ist. Das erfindungsgemäße Einsatzteil kann dabei aber dennoch kostengünstig in einem Zweikomponenten-Spritzverfahren hergestellt werden.

Für eine gute Schmutzabdichtung ist es weiterhin vorteilhaft, wenn das Einsatzteil hülsenförmig ausgebildet und in eine Erweiterung der Aufnahmeöffnung des Basisteils insbesondere mit Preßpassung und dadurch zumindest gegen Eindringen von Schmutz und dergleichen Fremdstoffen dichtend eingesetzt bzw. einsetzbar ist. Dabei liegt das Einsatzteil im eingesetzten Zustand vorzugsweise mündungsseitig bündig abschließend vollständig innerhalb des Basisteils. Durch diese vorteilhafte Ausgestaltung wird auch im Verbindungs- bzw. Kontaktbereich zwischen dem eingesetzten Einsatzteil und dem dieses vollständig aufnehmenden Basisteil eine optimale Abdichtung gegen Eindringen von Schmutz, Feuchtigkeit und dergleichen Fremdstoffen erreicht. Die vollständig versenkte Anordnung des Einsatzteils innerhalb des Basisteils führt zu einer sehr kompakten Bauform ohne überstehende Teile, die ansonsten im praktischen Einsatz zu Kollisionen mit anderen Teilen im Umgebungsbereich der Anschlußvorrichtung oder sogar - im Falle einer lösbaren Ausgestaltung des Einsatzteils - zu einem ungewollten Lösen der Rohrleitung führen könnten.

Weitere vorteilhafte Ausgestaltungsmerkmale der Erfindung sind in den Unteransprüchen sowie der folgenden Beschreibung enthalten.

Anhang von mehreren bevorzugten, in der Zeichnung veranschaulichten Ausführungsbeispielen soll im Folgenden die Erfindung genauer erläutert werden. Dabei zeigen:
- Fig.1: eine teilweise aufgeschnittene Perspektivansicht einer ersten Ausführungsform einer erfindungsgemäßen Anschlußvorrichtung.
- Fig. 2: eine teilgeschnittene Seitenansicht der Ausführung nach Fig.1,
- Fig. 3: einen Schnitt in der Ebene III - III gemäß Fig. 2,
- Fig. 4: einen Schnitt in der Ebene IV - IV gemäß Fig. 3,
- Fig. 5: eine vergrößerte Stirnansicht nur des gesonderten Einsatzteils in Pfeilrichtung V gemäß Fig. 3,
- Fig. 6: einen Schnitt in der Ebene VI- VI gemäß Fig. 5,
- Fig. 7: einen Schnitt in der Ebene VII- VII gemäß Fig. 5,
- Fig. 8: eine teilgeschnittene Perspektivansicht einer weiteren Ausführungsform der erfindungsgemäßen Anschlußvorrichtung,
- Fig. 9: eine halbgeschnittene Seitenansicht der Ausführung nach Fig. 8,
- Fig. 10: einen Axialschnitt in der Ebene X - X gemäß Fig. 9,
- Fig. 11: eine Perspektivansicht einer weiteren Ausführungsform der Anschlußvorrichtung,
- Fig. 12: einen vergrößerten Längsschnitt zur Ausführung nach Fig. 11,
- Fig. 13: eine Perspektivansicht einer weiteren Ausführungsform der Anschlußvorrichtung,
- Fig. 14: einen Längsschnitt zur Ausführung nach Fig. 13,
- Fig. 15: eine Perspektivansicht einer weiteren Ausführungsform der Anschlußvorrichtung,
- Fig. 16: einen vergrößerten Längsschnitt zur Ausführung nach Fig. 15,
- Fig. 17: ein weiteres Ausführungsbeispiel einer Anschlußvorrichtung wiederum in Perspektivansicht,
- Fig. 18: einen vergrößerten Längsschnitt zur Ausführung nach Fig. 17,
- Fig. 19: eine Perspektivansicht nur des gesonderten Einsatzteils mit vorteilhaften Ausgestaltungsmerkmalen,
- Fig. 20: eine Seitenansicht des Einsatzteils in Pfeilrichtung XX gemäß Fig. 19,
- Fig. 21: einen Schnitt in der Ebene A - A gemäß Fig. 20,
- Fig. 22: einen Schnitt in der Ebene B - B gemäß Fig. 21,
- Fig. 23: einen Schnitt in der Ebene F - F gemäß Fig. 20,
- Fig. 24: einen Querschnitt in der Ebene C - C gemäß Fig. 20,
- Fig. 25: einen Querschnitt in der Ebene E - E gemäß Fig. 22,
- Fig. 26: einen Querschnitt in der Ebene D - D gemäß Fig. 20 und
- Fig. 27: eine vergrößerte Einzelheit im Bereich A gemäß Fig. 21 in einer zweckmäßigen Ausgestaltung.

In den verschiedenen Figuren der Zeichnung sind gleiche Teile stets mit den gleichen Bezugszeichen versehen, so dass jede eventuell nur einmal unter Bezugnahme auf eine bestimmte Zeichnungsfigur erscheinende Beschreibung eines Teils analog auch bezüglich der anderen Zeichnungsfiguren gilt, in denen das Teil mit der entsprechenden Bezugsziffer ebenfalls zu erkennen ist.

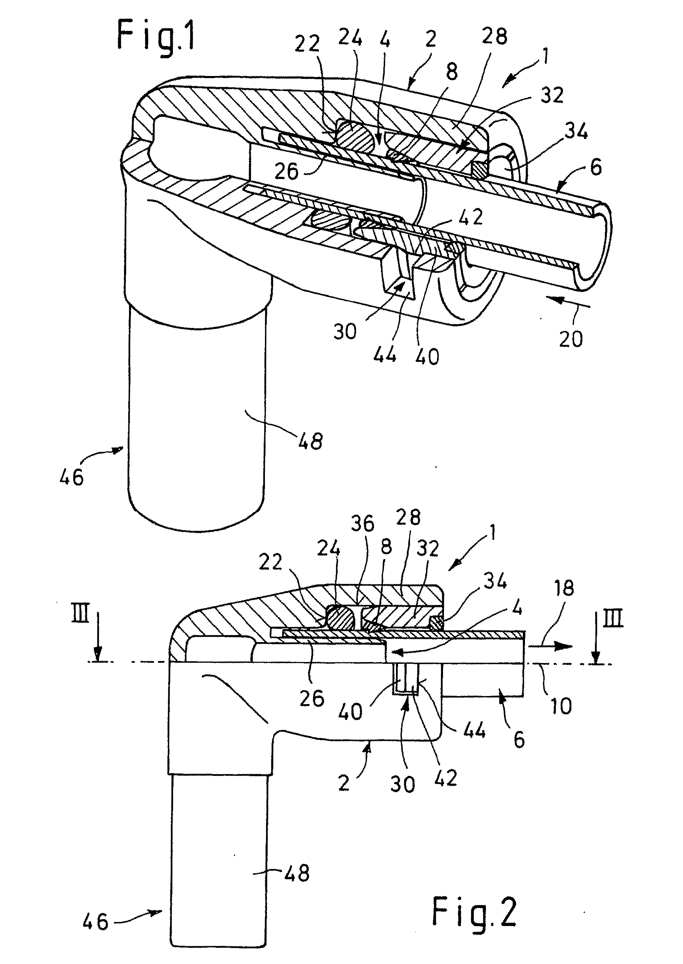

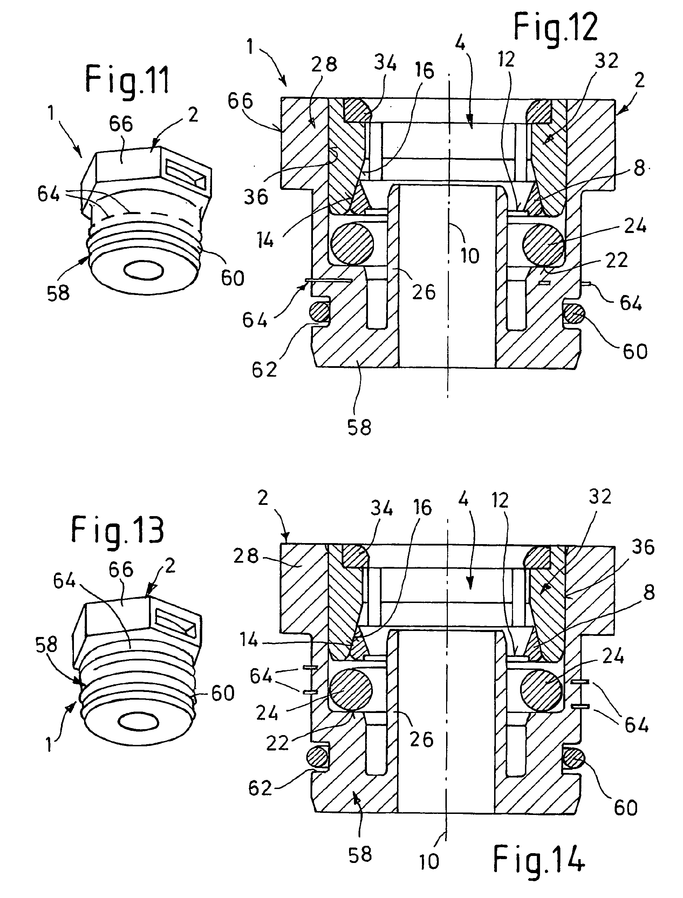

Eine erfindungsgemäße Anschlußvorrichtung 1 besteht in allen Ausführungsbeispielen aus einem Gehäuseteil 2 mit einer einseitig offenen Aufnahmeöffnung 4 zum axialen Einstecken eines Endes einer Rohrleitung 6 sowie aus einem in dem Gehäuseteil 2 bzw. in der Aufnahmeöffnung 4 angeordneten Klemmring 8 zum Arretieren der axial, d. h. in Richtung einer Steckachse 10, eingesteckten Rohrleitung 6. Dabei ermöglicht die Anschlußvorrichtung 1 eine einfache und schnelle Montage der insbesondere aus Kunststoff bestehenden Rohrleitung 6 durch einfaches Einstecken in das Gehäuseteil 2 ohne sonstige Montageschritte. Der Klemmring 8 sitzt derart in einer Erweiterung der Aufnahmeöffnung 4, dass er die Aufnahmeöffnung 4 und damit die eingesteckte Rohrleitung 6 umschließt. Der Klemmring 8 weist an einer Stelle seines Umfangs einen axial und radial durchgehenden Schlitz, d. h. eine Unterbrechung in seinem Umfangsverlauf auf, wodurch er radial elastisch aufgeweitet und/oder verengt werden kann. In seinem inneren Umfangsbereich besitzt der Klemmring 8 - siehe dazu insbesondere die größeren Darstellungen in Fig. 12, 14, 16 und 18 - (mindestens) eine radial nach innen ragende, umlaufende Zahnkante 12. Der Klemmring 8 weist ferner einen Außenkonus 14 auf, der zum Arretieren der Rohrleitung 6 mit einem Innenkonus 16 des Gehäuseteils 2 derart zusammenwirkt, das bei einem Zug in Löserichtung (Pfeilrichtung 18 in Fig. 2) an der Rohrleitung 6, d. h. bei einer Bewegung entgegen der Einsteckrichtung (Pfeil 20 in Fig. 1), der Klemmring 8 zunächst durch kraftschlüssige Anlage seiner Zahnkante 12 mitgenommen wird, bis sein Außenkonus 14 zur Anlage in dem Innenkonus 16 des Gehäuseteils 2 gelangt. Bei weitergehendem Zug wird über die Konen 14, 16 eine radial nach innen gerichtete Kraft erzeugt, durch die der Klemmring 8 elastisch verengt wird, so dass die Zahnkante 12 kraft- und/oder formschlüssig mit dem im Wesentlichen glattflächigen, zylindrischen Rohr - Außenumfang zusammenwirkt und so das Rohr gegen Herausziehen arretiert wird.

Zur druckdichten Abdichtung der Rohrleitung 6 ist innerhalb des Gehäuseteils 2 im Bereich zwischen dem Klemmring 8 und einer Bohrungsstufe 22 ein Dichtring 24 (Druckdichtung) angeordnet. Zudem ist bevorzugt innerhalb des Gehäuseteils eine zur Steckachse 10 koaxiale Stützhülse 26 zum kraftschlüssigen Eingriff in die eingesteckte Rohrleitung 6 angeordnet. Die Stützhülse 26 stützt somit die aufgesteckte Rohrleitung 6 einerseits gegen die über den Klemmring 8 aufgebrachte Radialkraft und andererseits auch gegen die Anlagekraft des Dichtringes 24 von innen her ab. Dadurch ist die erfindungsgemäße Anschlußvorrichtung 1 grundsätzlich auch für Schlauchleitungen geeignet.

Zum Zwecke der Herstellbarkeit bzw. Montierbarkeit der Anschlußvorrichtung 1 ist das Gehäuseteil 2 zweiteilig aus einem Basisteil 28 und einem mit diesem über eine schnappbare Formschlußverbindung 30 (formschlüssige Rastverbindung mit einem Wirkflächen-Hinterscheidungswinkel größer/kleiner 90°) verbundenen, den Innenkonus 16 aufweisenden Einsatzteil 32 ausgebildet. Das Einsatzteil 32 weist eine Schmutzdichtung 34 zur umfangsgemäßen Anlage auf der eingesteckten Rohrleitung 6 auf.

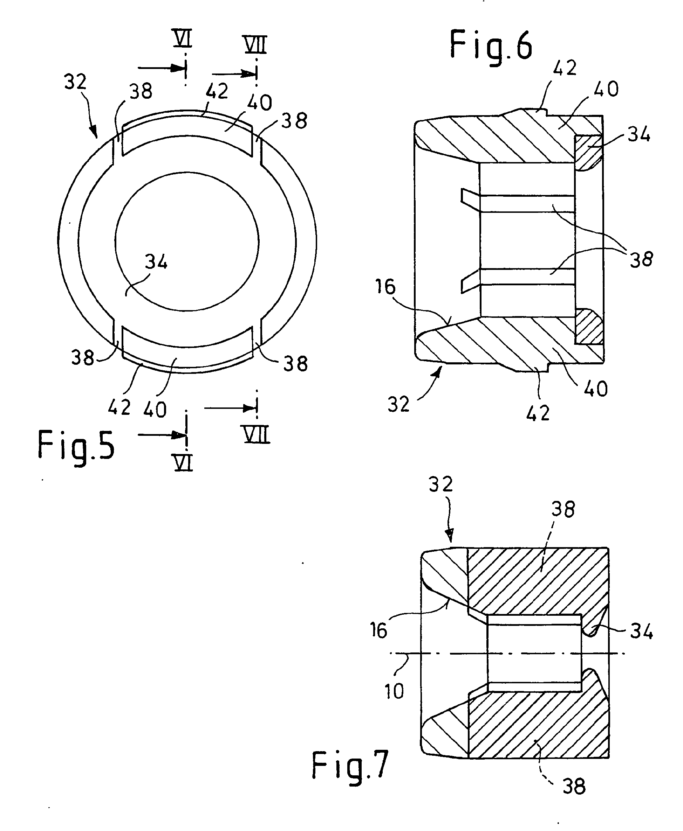

Erfindungsgemäß ist das Einsatzteil 32 mit der Schmutzdichtung 34 als einstückiges Zweikomponenten-Formteil aus zwei unterschiedlichen Kunststoffrnaterialien ausgebildet, und zwar besteht das Einsatzteil 32 aus einem ersten, relativ härteren und formstabilen Kunststoffmaterial, während die Schmutzdichtung 34 unmittelbar einstückig materialschlüssig aus einem zweiten, relativ weicheren und elastischen Kunststoffmaterial angeformt ist. Bevorzugt handelt es sich um ein thermoplastisches Elastomer (TPE). Hierbei weist die Schmutzdichtung 34, siehe dazu insbesondere Fig. 6, auf ihrer radial nach innen weisenden Seite einen wulstartigen Dichtungsbereich zur umfangsgemäßen Auflage auf der Rohrleitung 6 auf.

Das Einsatzteil 32 ist gemeinsam mit der Schmutzdichtung 34 insgesamt im Wesentlichen hülsenförmig ausgebildet und in eine Erweiterung 36 der Aufnahmeöffnung 4 des Basisteils 28 vorzugsweise mit Preßpassung und dadurch zumindest gegen Eindringen von Schmutz und der gleichen Fremdstoffen dichtend eingesetzt bzw. einsetzbar. Hierbei ist es besonders vorteilhaft, wenn das Einsatzteil 32 im eingesetzten Zustand mündungsseitig bündig abschließend vollständig innerhalb des Basisteils 28 liegt. Daraus resultiert eine vorteilhaft kompakte Bauform der Anschlußvorrichtung 1, die mündungsseitig eine ebene, über die Schmutzdichtung 34 zur Rohrleitung 6 hin geschlossene Stirnfläche aufweist.

Bei der schnappbaren Formschlußverbindung 30 kann es sich um eine in Umfangsrichtung umlaufende, geschlossene Ausführung von Rastelementen handeln (nicht dargestellt), was wegen des erreichten Formschlusses (Hinterschneidung ≥ 90°) zu einer Unlösbarkeit der Rohrleitung führt.

In den dargestellten, bevorzugten Ausführungsformen ist allerdings zwecks Lösbarkeit der Rohrleitung 6 vorgesehen, dass das hülsenförmige Einsatzteil 32 - siehe dazu insbesondere die gesonderten, vergrößerten Darstellungen in Fig. 5 bis 7 sowie Fig. 19 bis 27 - mindestens zwei durch Längsschlitze 38 gebildete, radialelastische, diametral gegenüberliegende Federarme 40 aufweist. Jeder Federarm 40 greift mit einem radial nach außen ragenden, nasenartigen Rastansatz 42 formschlüssig, d. h. mit Hinterschneidung ≥ 90°, in eine korrespondierende Rastöffnung 44 des Basisteils 28 lösbar ein. Die Rastöffnungen 44 sind hierbei als radiale Durchgangsöffnungen ausgebildet, so dass die Rastansätze 42 zum Lösen von außen mit einem geeigneten Werkzeug erreicht und radial nach innen bewegt werden können, wodurch die Rohrleitung 6 gemeinsam mit dem Klemmring 8 und dem Einsatzteil 32 entnommen werden kann (Pfeilrichtung 18. in Fig. 2).

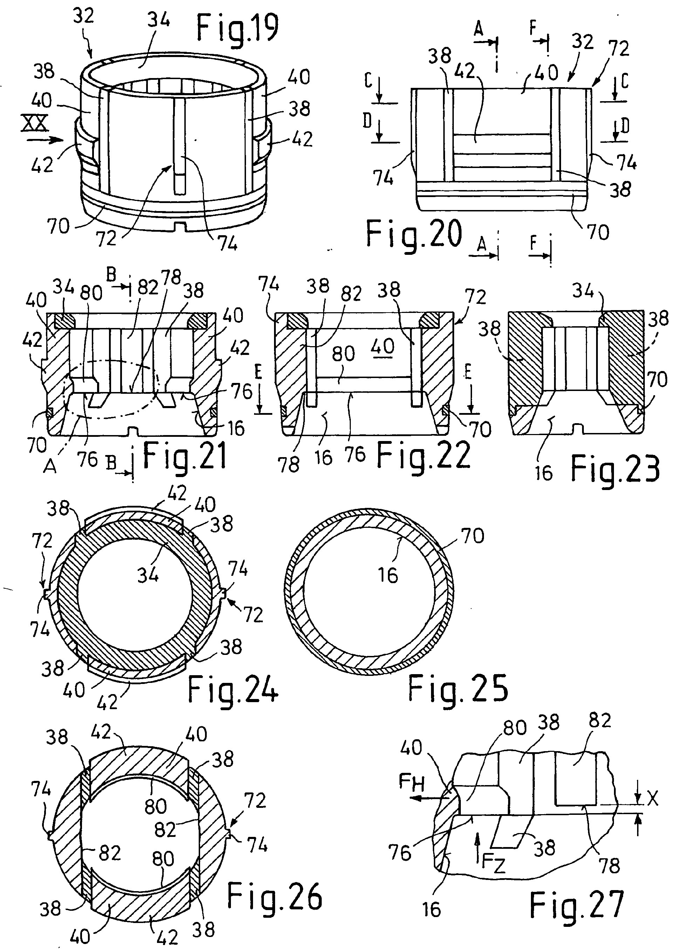

Bei der beschriebenen, bevorzugten Ausgestaltung ist es weiterhin vorteilhaft, wenn die Längsschlitze 38 des Einsatzteils 32 vollständig mit dem Material der Schmutzdichtung 34 ausgefüllt sind (siehe dazu den Schnitt im Bereich der Längsschlitze 38 in Fig. 7 bzw. 23). Diese Ausgestaltung führt zur Gewährleistung einer optimalen Schmutzabdichtung, weil auch im Bereich der Längsschlitze 38 tatsächliche Spalte vermieden werden. Dennoch gestattet die Elastizität des die Längsschlitze 38 ausfüllenden Dichtungsmaterials (insbesondere ein TPE) die erfoderliche Radialbewegung der Federarme 40.

Die oben beschriebene Stützhülse 26 ist zweckmäßigerweise einstückig mit dem Basisteil 28 ausgebildet.

Grundsätzlich kann die Anschlußvorrichtung 1 unmittelbarer Bestandteil eines beliebigen Aggregateteils (z. B. eines Ventilblocks) sein. In den dargestellten Ausführungsformen ist aber das Gehäuseteil 2 über (mindestens) einen Verbindungsabschnitt 46 mit einem weiteren beliebigen Aggregateteil (nicht dargestellt) verbindbar. Dazu seien verschiedene Ausführungen wie folgt beschrieben.

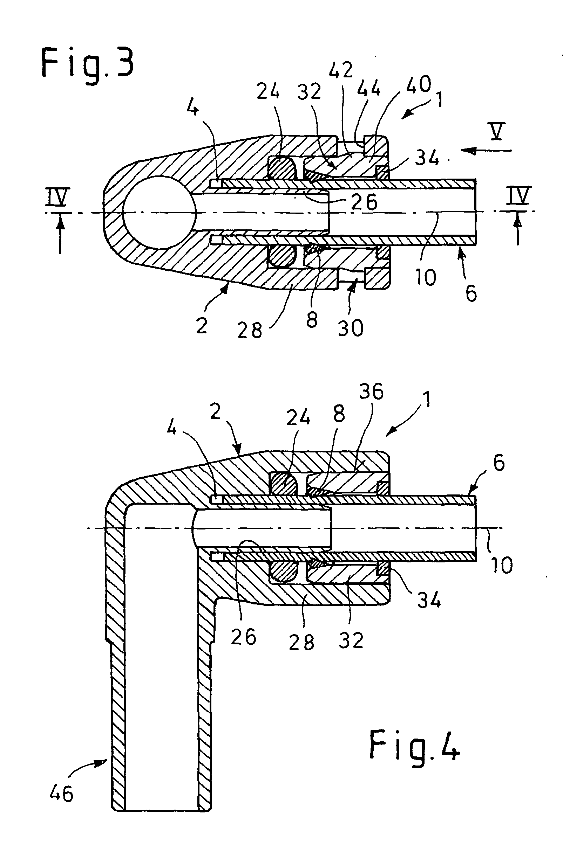

So ist bei der Ausführung gemäß Fig. 1 bis 4 der Verbindungsabschnitt 46 als Rohransatz 48 zum Einstecken in eine Aufnahmeöffnung ausgebildet. Dabei kann es sich auch um eine Aufnahmeöffnung 4 einer weiteren erfindungsgemäßen Anschlußvorrichtung 1 handeln. Bei der dargestellten Ausführung ist der Rohransatz 48 bezüglich seiner Längsachse rechtwinklig zur Steckachse 10 angeordnet, so dass es sich um einen Winkelverbinder handelt. Hierbei ist in bevorzugter Ausgestaltung vorgesehen, dass das Basisteil 28 einstückig mit dem Rohransatz 48 als Zweikomponenten-Formteil aus Kunststoff ausgebildet ist, wobei der Bereich des Rohransatzes 48 aus einem relativ weicheren Material, und zwar insbesondere entsprechend dem Material üblicher Kunststoff-Rohrleitungen 6, und der übrige Bereich aus einem relativ härteren Material bestehen. Diese Ausgestaltung begünstigt die Halterung des Rohransatzes 48 über einen Klemmring entsprechend dem Klemmring 8, indem sich die Zahnkante 12 gut in das weichere Material eindrücken kann. Weiterhin wird durch die weiche Komponente, genauso wie bei üblichen Kunststoff-Rohrleitungen, ein späteres Lösen des Einsatzteils durch radiale Verformbarkeit des Rohres/Rohransatzes möglich.

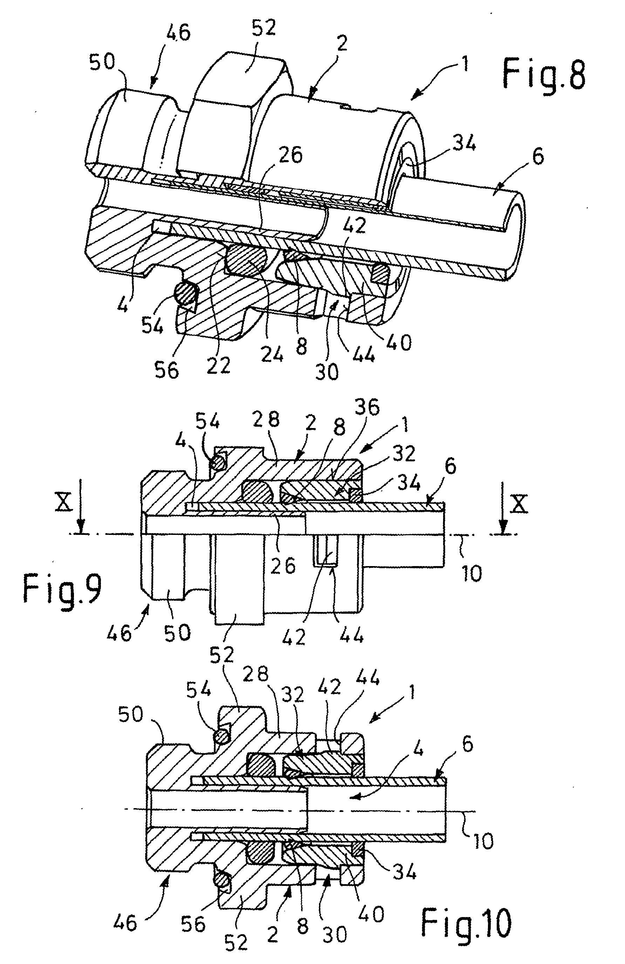

Bei der Ausführungsform gemäß Fig. 8 bis 10 ist der Verbindungsabschnitt 46 als Schraubgewindeansatz 50, insbesondere in Form eines Außengewindestutzens, ausgebildet. In diesem Fall entspricht eine Verschraubungsachse des Schraubgewindeansatzes 50 dem Verlauf der Steckachse 10. Zum Verschrauben des Schraubgewindeansatzes 50 in eine korrespondierende Gewindebohrung weist das Gehäuseteil 2 einen Betätigungsansatz 52 insbesondere in Form eines Außensechskantes auf. Zur Abdichtung des eirigeschraubten Gehäuseteils gegen das jeweilige Aggregateteil ist ein Dichtring 54 vorgesehen. Wie dargestellt kann es sich um einen Axialdichtring handeln, der in einer entsprechenden Aufnahmenut 56 auf der in Richtung des Schraubgewindeansatzes 50 weisenden Stirnseite des Betätigungsansatzes 52 angeordnet ist.

Bei den Ausführungsformen gemäß Fig. 11 bis 18 ist das Gehäuseteil 2 jeweils als Einpreßpatrone ausgebildet, die mit einem Einsteckabschnitt 56 in eine Anschlußöffnung eines nicht dargestellten Aggregateteils einsetzbar (einsteckbar/einpressbar) ist. Bei der Anschlußöffnung kann es sich um eine einfache, glattwandige Bohrung handeln. Hierbei ist es vorteilhaft, wenn die Anschlußöffnung einen Durchmesser aufweist, der dem Kemloch-Durchmesser einer Gewindebohrung entspricht, die zum Einschrauben des Schraubgewindestutzens 50 gemäß Fig. 8 bis 10 vorgesehen ist. Hierdurch wird der Vorteil erreicht, dass ein Aggregateteil-Hersteller das jeweilige Aggregateteil jeweils mit dem selben Kemloch-Durchmesser ausstatten kann, wobei dann wahlweise die Ausführung nach Fig. 8 bis 10 oder eine der Ausführungen gemäß Fig. 11 bis 18 zum Einsatz kommen kann. Für die Schraubgewindeausführung nach Fig. 8 bis 10 braucht nur noch das entsprechende Kernloch mit einem passenden Gewinde versehen zu werden.

Bei den Ausführungen nach Fig. 11 bis 18 ist zur Abdichtung innerhalb der Anschlußöffnung ein Dichtring 60 im Bereich des Einsteckabschnittes 58 vorgesehen, wobei dieser Dichtring 60 in einer Aufnahmenut 62 angeordnet ist. Zur Halterung des Gehäuseteils 2 innerhalb der Anschlußöffnung ist auf dem Außenumfang des Einsteckabschnittes 58 mindestens ein radial vorstehendes Zahnelement 64 zum form- oder kraftformschlüssigen Eingriff in die Anschlußöffnung vorgesehen. Hierbei ist es besonders vorteilhaft, wenn der Einsteckabschnitt 58 mindestens ein derart gewindeartig wirkendes Zahnelement 64 aufweist, dass das Gehäuseteil 2 einerseits mit dem Einsteckabschnitt 58 axial in die Anschlußöffnung einpreßbar sowie andererseits durch Herausschrauben aus der Anschlußöffnung entnehmbar ist. Dazu weist das Gehäuseteil 2 vorzugsweise im Anschluß an den Einsteckabschnitt 58 einen Betätigungsabschnitt 66 insbesondere in Form eines Außensechskantelementes auf.

Es wird hierzu ausdrücklich darauf hingewiesen, dass diese speziellen Ausgestaltungen gemäß Fig. 11 bis 18 grundsätzlich für jedes beliebige Gehäuseteil geeignet sind, weiches als Einpreßpatrone in eine beliebige Anschlußöffnung einsetzbar ist. Insofern können diese Merkmale auch unabhängig vom Gegenstand des Anspruchs 1 Anwendung finden.

Bei den Ausführungen gemäß Fig. 11 bis 14 besteht das Gehäuseteil bzw. das Basisteil 28 aus Kunststoff, wobei im Falle der Fig. 11 und 12 ein Zackenring aus Metall in das Kunststoffmaterial eingebettet ist und mit den Zahnelementen 64 nach außen ragt. Hierbei sind die Zahnelemente 64 auf einem Kreis gleichmäßig verteilt angeordnet. Im Falle der Ausführung nach Fig. 13 und 14 ist ein streifenförmiges Metallband in Form eines schraubenlinienförmigen Gewindegangs in das Kunststoffmaterial eingebettet.

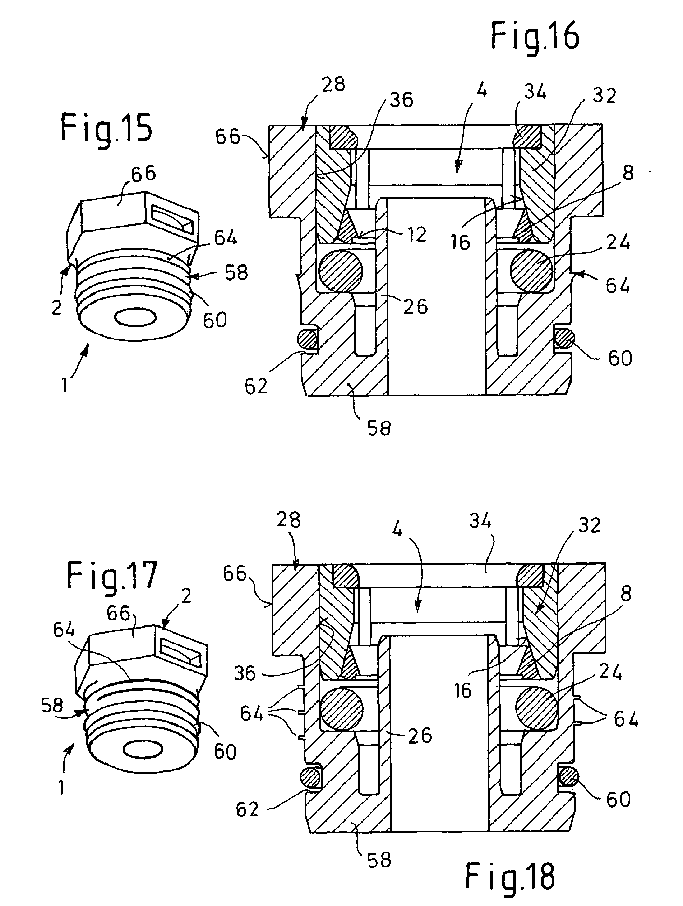

Bei den Ausführungen nach Fig. 15 bis 18 besteht das Basisteil 28 aus Metall, insbesondere Messing, wobei das oder die Zahnelemente 64 des Einsteckabschnittes 58 einstückig angeformt sind. Im Falle der Ausführung gemäß Fig. 15 und 16 handelt es sich bei dem Zahnelement 64 um eine ringförmige Zahnkante. Gemäß Fig. 17 und 18 ist als Zahnelement 64 eine schraubenlinienförmige verlaufende Gewindekante vorgesehen.

In den Fig. 19 bis 27 sind weitere bevorzugte Ausgestaltungsmerkmale des Einsatzteils 32 veranschaulicht. Bei dieser bevorzugten Ausführung weist das Einsatzteil 32 zunächst zur umfangsgemäßen Abdichtung zum Basisteil 28 hin einen äußeren Umfangsdichtwulst 70 auf. Bei der dargestellten, bevorzugten Ausführung besteht dieser Umfangsdichtwulst 70 aus einem relativ weichen elastischen Material und ist dazu insbesondere einstückig materialschlüssig gemeinsam mit der Schmutzdichtung 34 und mit dem die Längsschlitze 38 ausfüllenden Material angeformt (siehe hierzu insbesondere Fig. 23). Somit besteht auch der Umfangsdichtwulst 70 bevorzugt aus einem TPE (thermoplastischen Elastomer). Alternativ dazu könnte der Umfangsdichtwulst 70 aber grundsätzlich auch aus einem relativ härteren, beispielsweise dem faserverstärkten Material des Einsatzteils 32, angeformt sein. Die bevorzugte Ausführung aus weichelastischem Material führt aber zu besonderen Vorteilen, und zwar zu einem "weichen Dichten" und zu geringen Montage-/Demontagekräften beim Einsetzen bzw. Demontieren des Einsatzteils 32, da auf eine Presspassung verzichtet werden kann.

Weiterhin weist das Einsatzteil 32 auf seinem Außenumfang Positioniermittel 72 zum selbsttätigen Ausrichten (insbesondere zur Selbstzentrierung und Selbstausrichtung in Drehrichtung um die Steckachse 10) beim Einsetzen in das Basisteil 28 auf. Bei dem in Fig. 19 bis 27 veranschaulichten Ausführungsbeispiel sind diese Positioniermittel 72 durch zwei diametral gegenüberliegende, radial vorspringende und axial in Einsetzrichtung verlaufende Längsrippen 74 gebildet, die in korrespondierende Längsnuten des Basisteils 28 (nicht dargestellt) einführbar sind, um hierdurch das Einsatzteil 32 lagerichtig auszurichten, damit nachfolgend die Rastansätze 42 der Federarme 40 korrekt in die Rastöffnungen 44 des Basisteils 28 einrasten können.

In weiterer vorteilhafter Ausgestaltung ist bei der Ausführung gemäß Fig. 19 bis 27 vorgesehen, dass innerhalb des Einsatzteils 32 im Anschluß an den Innenkonus 16 Haltekanten als axialer Endanschlag gegen eine in Herausziehrichtung der Rohrleitung 6 gerichtete Bewegung des Klemmrings 8 gebildet sind, und zwar sind im Bereich der Federarme 40 erste Haltekanten 76 und in den zwischen den Federarmen 40 bzw. jeweils zwischen den Schlitzen 38 liegenden Bereichen zweite Haltekanten 78 gebildet. Die ersten Haltekanten 76 sind durch radial nach innen vorspringende Ansätze 80 der Federarme 40 gebildet (siehe insbesondere Fig. 21). Die zweiten Haltekanten 78 sind gemäß Fig. 26 durch radial nach innen vorspringende Bereiche 82 gebildet. Durch die Haltekanten 76, 78 werden hohe Abzugskräfte ermöglicht, was eine hohe Sicherheit gegen ungewolltes Lösen der Rohrleitung 6 gewährleistet. Dabei kann gemäß Fig. 27 in bevorzugter Ausgestaltung zusätzlich vorgesehen sein, die ersten Haltekanten 76 gegenüber den zweiten Haltekanten 78 derart um einen axialen Versatz X in Richtung des Innenkonus 16 zu versetzen, dass der Klemmring bei Beaufschlagung mit einer in Herausziehrichtung der Rohrleitung 6 wirkenden Kraft F_{Z} zunächst zur Anlage nur an den ersten Haltekanten 76 gelangt, wodurch die Federarme mit einer radial nach außen wirkenden Haltekraft-Komponente F_{H} beaufschlagt werden. Der axiale Versatz X ist dabei jedoch derart gering bemessen, dass nach einer Verformung im elastischen Bereich der Klemmring zusätzlich zur Anlage an den zweiten Haltekanten 78 gelangt, was die Sicherheit gegen Lösen noch verbessert. Bei Anlage des Klemmrings 8 an den ersten Haltekanten 76 kommt es somit zu einer Kraftzerlegung, wobei die radiale Komponente F_{H} dafür sorgt, dass die Haltekraft der elastischen Federarme 40 erhöht wird. Dadurch werden sehr hohe Abzugskräfte erreicht.

## Patentansprüche

1. Anschlußvorrichtung (1) zum Steckanschluß mindestens einer Rohrleitung (6), bestehend aus einem Gehäuseteil (2) mit mindestens einer Aufnahmeöffnung (4) zum Einstecken der Rohrleitung (6) sowie aus einem in der Aufnahmeöffnung (4) angeordneten Klemmring (8), der zum Arretieren der Rohrleitung (6) mit einem Innenkonus (16) des Gehäuseteils (2) zusammenwirkt, wobei das Gehäuseteil (2) zweiteilig aus einem Basisteil (28) und einem mit diesem über eine schnappbare Formschlußverbindung (30) verbundenen, den Innenkonus (16) aufweisenden Einsatzteil (32) besteht und das Einsatzteil (32) eine Schmutzdichtung (34) zur umfangsgemäßen Anlage auf der eingesteckten Rohrleitung (6) aufweist,
**dadurch gekennzeichnet, dass** das Einsatzteil (32) aus einem ersten, relativ härteren und formstabilen Kunststoffmaterial besteht und die Schmutzdichtung (34) unmittelbar einstückig materialschlüssig aus einem zweiten, relativ weicheren und elastischen Kunststoffmaterial angeformt ist.

2. Anschlußvorrichtung nach Anspruch 1,
**dadurch gekennzeichnet, dass** das Einsatzteil (32) hülsenförmig ausgebildet und in eine Erweiterung (36) der Aufnahmeöffnung (4) des Basisteils (28) umfangsgemäß zumindest gegen Eindringen von Schmutz und dergleichen Fremdstoffen dichtend eingesetzt bzw. einsetzbar ist, wobei das Einsatzteil (32) im eingesetzten Zustand vorzugsweise mündungsseitig bündig abschließend vollständig innerhalb des Basisteils (28) liegt.

3. Anschlußvorrichtung nach Anspruch 1 oder 2,
**dadurch gekennzeichnet, dass** das hülsenförmige Einsatzteil (32) zwecks Lösbarkeit der Rohrleitung (6) mindestens zwei durch Längsschlitze (38) gebildete, radialelastische Federarme (40) aufweist, die mit radial nach außen ragenden Rastansätzen (42) formschlüssig in korrespondierende Rastöffnungen (44) des Basisteils (28) lösbar eingreifen.

4. Anschlußvorrichtung nach Anspruch 3,
**dadurch gekennzeichnet, dass** die Längsschlitze (38) mit dem Material der Schmutzdichtung (34) ausgefüllt sind.

5. Anschlußvorrichtung nach Anspruch 1 oder 2,
**dadurch gekennzeichnet, dass** die schnappbare Formschlußverbindung (30) in Umfangsrichtung umlaufende, geschlossene Rastelemente aufweist.

6. Anschlußvorrichtung nach einem der Ansprüche 1 bis 5,
**dadurch gekennzeichnet, dass** innerhalb des Basisteils (28) eine zur Steckachse (10) koaxiale Stützhülse (26) zum kraftschlüssigen Eingriff in die eingesteckte Rohrleitung (6) angeordnet ist.

7. Anschlußvorrichtung nach einem der Ansprüche 1 bis 6,
**dadurch gekennzeichnet, dass** das Gehäuse (2) über mindestens einen Verbindungsabschnitt (46) mit einem weiteren Aggregateteil verbindbar ist.

8. Anschlußvorrichtung nach Anspruch 7,
**dadurch gekennzeichnet, dass** der Verbindungsabschnitt (46) als Rohransatz (48) zum Einstecken in eine Aufnahmeöffnung ausgebildet ist.

9. Anschlußvorrichtung nach Anspruch 8,
**dadurch gekennzeichnet, dass** das Basisteil (28) als Zweikomponenten-Formteil aus Kunststoff ausgebildet ist, wobei der Bereich des Rohransatzes (48) aus einem relativ weicheren Material und der übrige Bereich aus einem relativ härteren Material bestehen.

10. Anschußvorrichtung nach Anspruch 7,
**dadurch gekennzeichnet, dass** der Verbindungsabschnitt (46) als Schraubgewindeansatz (50), insbesondere als Außengewindestutzen, ausgebildet ist.

11. Anschlußvorrichtung insbesondere nach einem der Ansprüche 1 bis 6,
**dadurch gekennzeichnet, dass** das Gehäuseteil (2) mit einem Einsteckabschnitt (58) als Einpreßpatrone in eine Anschlußöffnung eines Aggregateteils einsetzbar ist.

12. Anschlußvorrichtung nach Anspruch 11,
**dadurch gekennzeichnet, dass** das Gehäuseteil (2) auf dem Umfang des Einsteckabschnittes (56) mindestens ein Zahnelement (64) zum form- oder kraftformschlüssigen Eingriff in die Anschlußöffnung aufweist.

13. Anschlußvorrichtung nach Anspruch 11 oder 12,
**dadurch gekennzeichnet, dass** der Einsteckabschnitt (56) auf seinem Umfang mindestens ein derart gewindeartig wirkendes Zahnelement (64) aufweist, dass das Gehäuseteil (2) einerseits mit dem Einsteckabschnitt (58) axial in die Anschlußöffnung einsteckbar und andererseits durch Herausschrauben aus der Anschlußöffnung entnehmbar ist.

14. Anschlußvorrichtung nach Anspruch 12 oder 13,
**dadurch gekennzeichnet, dass** das Gehäuseteil (2) bzw. das Basisteil (28) aus Metall, insbesondere Messing, besteht, wobei das oder die Zahnelemente (64) des Einsteckabschnittes (58) einstückig angeformt sind.

15. Anschlußvorrichtung nach Anspruch 12 oder 13,
**dadurch gekennzeichnet, dass** dasGehäuse-bzw.Basisteil(2, 28) aus Kunststoff besteht, wobei das oder die Zahnelemente (64) aus Metall bestehen und bereichsweise in den Kunststoff eingebettet sind.

16. Anschlußvorrichtung nach einem der Ansprüche 2 bis 15,
**dadurch gekennzeichnet, dass** das Einsatzteil (32) zur umfangsgemäßen Abdichtung zum Basisteil (28) hin mit Presspassung in das Basisteil (28) eingesetzt bzw. einsetzbar ist und/oder einen äußeren Umfangsdichtwulst (70) aufweist.

17. Anschlußvorrichtung nach Anspruch 16,
**dadurch gekennzeichnet, dass** der Umfangsdichtwulst (70) des Einsatzteils (32) aus einem elastischen Material besteht und insbesondere einstückig materialschlüssig gemeinsam mit der Schmutzdichtung (34) und bevorzugt mit dem die Längsschlitze (38) ausfüllenden Material angeformt ist.

18. Anschlußvorrichtung nach einem der Ansprüche 1 bis 17,
**dadurch gekennzeichnet, dass** das Einsatzteil (32) auf seinem Außenumfang Positioniermittel (72) zum selbsttätigen Ausrichten beim Einsetzen in das Basisteil (28) aufweist, wobei die Positioniermittel (72) insbesondere durch zwei diametral gegenüberliegende, radial vorspringende und axial in Einsetzrichtung verlaufende Längsrippen (74) gebildet sind, die in korrespondierende Längsnuten des Basisteils (28) eingreifen.

19. Anschlußvorrichtung nach einem der Ansprüche 1 bis 18,
**dadurch gekennzeichnet, dass** innerhalb des Einsatzteils (32) im Anschluss an den Innenkonus (16) Haltekanten (76, 78) als axialer Endanschlag für den Klemmring (8) gebildet sind.

20. Anschlußvorrichtung nach Anspruch 19,
**dadurch gekennzeichnet, dass** ersteHaltekanten(76)im Bereich der Federarme (40) und zweite Haltekanten (78) in den zwischen den Federarmen (40) liegenden Bereichen gebildet sind, wobei die ersten Haltekanten (76) gegenüber den zweiten Haltekanten (78) derart um einen axialen Versatz (X) in Richtung des Innenkonus (16) versetzt sind, dass der Klemmring (8) bei Beaufschlagung mit einer in Herausziehrichtung der Rohrleitung (6) wirkenden Kraft (F_{Z}) zunächst zur Anlage nur an den ersten Haltekanten (76) gelangt und **dadurch** die Federarme (40) mit einer radial nach außen wirkenden Haltekraft-Komponente (F_{H}) beaufschlagt werden.

## Claims

1. Connecting device (1) for the plug-in connection of at least one pipe (6), comprising a housing part (2) having at least one receiving opening (4) for the insertion of the pipe (6), and a clamping ring (8), which is arranged in the receiving opening (4) and, in order to lock the pipe (6) in place, interacts with an inner cone (16) of the housing part (2), the housing part (2) being made in two parts from a base part (28) and an insert part (32), which is connected to the base part via a snap-action form-fitting connection (30) and has the inner cone (16), and the insert part (32) having a dirt seal (34) for resting on the circumference of the inserted pipe (6),
**characterised in that** the insert part (32) consists of a first, relatively harder and dimensionally stable plastic material and the dirt seal (34), consisting of a second, relatively softer and elastic plastic material, is moulded directly onto the first material as a single piece with a cohesive material joint therebetween.

2. Connecting device according to Claim 1,
**characterised in that** the insert part (32) is of sleeve-shaped design and is inserted or insertable into a widened portion (36) of the receiving opening (4) of the base part (28) in a manner providing a circumferential seal at least against the penetration of dirt and similar foreign bodies, the insert part (32), in the inserted state, preferably lying completely within the base part (28) and ending flush at the mouth.

3. Connecting device according to Claim 1 or 2,
**characterised in that** the sleeve-shaped insert part (32) has, for the purpose of being able to release the pipe (6), at least two radially elastic spring arms (40) which are formed by longitudinal slots (38) and engage releasably by means of radially outwardly protruding latching attachments (42) in a form-fitting manner in corresponding latching openings (44) of the base part (28).

4. Connecting device according to Claim 3,
**characterised in that** the longitudinal slots (38) are filled with the material of the dirt seal (34).

5. Connecting device according to Claim 1 or 2,
**characterised in that** the snap-action form-fitting connection (30) has closed latching elements running around in the circumferential direction.

6. Connecting device according to one of Claims 1 to 5,
**characterised in that** a supporting sleeve (26) which is coaxial with the plug-in axis (10) is arranged within the base part (28) for the frictional engagement in the inserted pipe (6).

7. Connecting device according to one of Claims 1 to 6,
**characterised in that** the housing (2) can be connected to a further assembly part via at least one connecting section (46).

8. Connecting device according to Claim 7,
**characterised in that** the connecting section (46) is designed as a pipe attachment (48) for insertion into a receiving opening.

9. Connecting device according to Claim 8,
**characterised in that** the base part (28) is designed as a two-component moulded part of plastic, the region of the pipe attachment (48) consisting of a relatively softer material and the remaining region consisting of a relatively harder material.

10. Connecting device according to Claim 7,
**characterised in that** the connecting section (46) is designed as a screw thread attachment (50), in particular as an externally threaded connector.

11. Connecting device in particular according to one of Claims 1 to 6,
**characterised in that** the housing part (2) can be inserted with a plug-in section (58) as a press-in cartridge into a connecting opening of an assembly part.

12. Connecting device according to Claim 11,
**characterised in that** the housing part (2) has, on the circumference of the plug-in section (56), at least one tooth element (64) for the form-fitting or frictional engagement in the connecting opening.

13. Connecting device according to Claim 11 or 12,
**characterised in that** the plug-in section (56) has, on its circumference, at least one tooth element (64) which acts in the manner of a thread such that the housing part (2), on the one hand, can be plugged in with the plug-in section (58) axially into the connecting opening and, on the other hand, can be removed from the connecting opening by unscrewing it.

14. Connecting device according to Claim 12 or 13,
**characterised in that** the housing part (2) or the base part (28) consists of metal, in particular brass, the tooth element or tooth elements (64) of the plug-in section (58) being moulded on as a single piece.

15. Connecting device according to Claim 12 or 13,
**characterised in that** the housing part or base part (2, 28) consists of plastic, the tooth element or tooth elements (64) consisting of metal and being embedded in some regions in the plastic.

16. Connecting device according to one of Claims 2 to 15,
**characterised in that** the insert part (32), for the circumferential sealing towards the base part (28) is inserted or insertable into the base part (28) with a press fit and/or has an outer circumferential sealing bead (70).

17. Connecting device according to Claim 16,
**characterised in that** the circumferential sealing bead (70) of the insert part (32) consists of an elastic material and in particular is moulded on as a single piece with a cohesive material joint together with the dirt seal (34) and preferably with the material filling the longitudinal slots (38).

18. Connecting device according to one of Claims 1 to 17,
**characterised in that** the insert part (32) has positioning means (72) on its outer circumference for the automatic aligning on insertion into the base part (28), the positioning means (72) being formed, in particular, by means of two diametrically opposite, radially projecting longitudinal ribs (74) which run axially in the insertion direction and engage in corresponding longitudinal grooves of the base part (28).

19. Connecting device according to one of Claims 1 to 18,
**characterised in that** retaining edges (76, 78) are formed within the insert part (32) following the inner cone (16) as an axial end stop for the clamping ring (8).

20. Connecting device according to Claim 19,
**characterised in that** first retaining edges (76) are formed in the region of the spring arms (40) and second retaining edges (78) are formed in the regions situated between the spring arms (40), the first retaining edges (76) being offset with respect to the second retaining edges (78) by an axial offset (X) in the direction of the inner cone (16) such that the clamping ring (8), when subjected to a force (F_{Z}) acting in the pulling-out direction of the pipe (6), first of all only comes to bear against the first retaining edges (76) and, as a result, the spring arms (40) are subjected to a radially outwardly acting retaining-force component (F_{H}).

## Revendications

1. Dispositif de raccordement (1) pour l'enfichage d'au moins un tuyau rigide (6), constitué d'une partie de carter (2) avec au moins un orifice d'admission (4) pour l'insertion du tuyau rigide (6) ainsi que d'une bague de serrage (8) disposée dans l'orifice d'admission (4), qui coopère avec un cône intérieur (16) de la partie de carter (2) pour bloquer le tuyau rigide (6), la partie de carter (2) en deux parties comportant une partie de base (28) et une partie rapportée (32) reliée à ladite partie de base par complémentarité de forme (30) par un raccord encliquetable et comprenant le cône intérieur (16), et la partie rapportée (32) présentant un joint anti-poussière (34) pour application suivant le pourtour du tuyau rigide (6) enfiché,
**caractérisé en ce que** la partie rapportée (32) est formée d'un premier matériau synthétique, relativement plus dur et indéformable, et **en ce que** le joint anti-poussière (34), à base d'un deuxième matériau synthétique, relativement plus mou et élastique, est directement moulé d'un seul tenant par liaison de matière.

2. Dispositif de raccordement selon la revendication 1,
**caractérisé en ce que** la partie rapportée (32) est conformée en manchon et est insérée ou peut être insérée dans une extension (36) de l'orifice d'admission (4) de la partie de base (28) en suivant le pourtour, pour le rendre étanche, au moins à la pénétration de poussière ou de corps étrangers similaires, la partie rapportée (32) se trouvant à l'état inséré entièrement à l'intérieur de la partie de base (28), de préférence côté embouchure, en se terminant en affleurement.

3. Dispositif de raccordement selon l'une quelconque des revendications 1 ou 2,
**caractérisé en ce que** la partie rapportée (32) conformée en manchon présente en vue de permettre le retrait du tuyau rigide (6), au moins deux bras radialement élastiques (40), formés par des fentes longitudinales (38), qui sont en prise de manière amovible par complémentarité de forme, dans les orifices d'encliquetage (44) correspondants de la partie de base (28) avec des bossages d'encliquetage (42) saillants radialement vers l'extérieur.

4. Dispositif de raccordement selon la revendication 3,
**caractérisé en ce que** les fentes longitudinales (38) sont remplies avec le matériau du joint anti-poussière (34).

5. Dispositif de raccordement selon l'une quelconque des revendications 1 ou 2,
**caractérisé en ce que** le raccord par complémentarité de forme (30) encliquetable présente des éléments d'encliquetage fermés, faisant le tour de la circonférence.

6. Dispositif de raccordement selon l'une quelconque des revendications 1 à 5,
**caractérisé en ce qu'**à l'intérieur de la partie de base (28) est disposé coaxialement à l'axe d'enfichage (10), un manchon enfichable (26) pour engagement à force dans le tuyau rigide (6) enfiché.

7. Dispositif de raccordement selon l'une quelconque des revendications 1 à 6,
**caractérisé en ce que** la partie de carter (2) peut être reliée à une autre partie de l'équipement, au moins par un tronçon de raccord (46).

8. Dispositif de raccordement selon la revendication 7,
**caractérisé en ce que** le tronçon de raccord (46) est réalisé sous forme de rallonge de tuyau (48) à enficher dans un orifice de réception.

9. Dispositif de raccordement selon la revendication 8,
**caractérisé en ce que** la partie de base (28) est conçue comme une partie moulée en plastique à deux composants, la zone de la rallonge de tuyau (48) étant à base d'un matériau relativement plus mou et la partie restante à base d'un matériau relativement plus dur.

10. Dispositif de raccordement selon la revendication 7,
**caractérisé en ce que** le tronçon de raccord (46) est réalisé sous forme de raccord fileté (50), en particulier comme tubulure à filetage mâle.

11. Dispositif de raccordement selon l'une quelconque des revendications 1 à 6,
**caractérisé en ce que** la partie de carter (2) peut être insérée dans un orifice de raccordement d'une partie de l'équipement, par une partie enfichable (58) sous forme de cartouche à enfoncer.

12. Dispositif de raccordement selon la revendication 11,
**caractérisé en ce que** la partie de carter (2) présente sur le pourtour du tronçon enfichable (56), au moins un élément denté (64) pour un engrènement par complémentarité de forme ou à force dans l'orifice de raccordement.

13. Dispositif de raccordement selon l'une quelconque des revendications 11 ou 12,
**caractérisé en ce que** le tronçon enfichable (56) comprend sur son pourtour, au moins un élément denté (64) agissant comme un filetage de telle sorte que la partie du carter (2) puisse d'une part être enfichée axialement dans l'orifice de raccordement par la partie enfichable (58) et de l'autre, retirée de l'orifice de raccordement par dévissage.

14. Dispositif de raccordement selon l'une quelconque des revendications 12 ou 13,
**caractérisé en ce que** la partie de carter (2) ou la partie de base (28) est constituée de métal, en particulier de laiton, le ou les éléments dentés (64) de la partie enfichable (58) étant conformés d'un seul tenant.

15. Dispositif de raccordement selon l'une quelconque des revendications 12 ou 13,
**caractérisé en ce que** la partie de carter ou de base (2, 28) est constituée de plastique, le ou les éléments dentés (64) étant à base de métal et encastrés par endroits dans le plastique.

16. Dispositif de raccordement selon l'une quelconque des revendications 2 à 15,
**caractérisé en ce que** pour l'étanchéité du pourtour vers la partie de base (28), la partie rapportée (32) est intégrée ou intégrable dans la partie de base (28) par un ajustement à serrage et/ou présente un bourrelet d'étanchéité circonférentiel (70) extérieur.

17. Dispositif de raccordement selon la revendication 16,
**caractérisé en ce que** le bourrelet d'étanchéité circonférentiel (70) de la partie rapportée (32) est constitué d'un matériau élastique et est en particulier moulé d'un seul tenant par liaison de matière, conjointement avec le joint anti-poussière (34) et de préférence, avec le matériau remplissant la fente longitudinale (3 8).

18. Dispositif de raccordement selon l'une quelconque des revendications 1 à 17,
**caractérisé en ce que** la partie rapportée (32) comporte sur sa périphérie extérieure, des moyens de positionnement (72) pour l'alignement automatique lors de l'insertion dans la partie de base (28), les moyens de positionnement (72) étant constitués notamment de deux nervures longitudinales (74) diamétralement opposées, radialement saillantes et s'étendant axialement dans le sens d'insertion, qui s'engagent dans les rainures longitudinales correspondantes de la partie de base (28).

19. Dispositif de raccordement selon l'une quelconque des revendications 1 à 18,
**caractérisé en ce que** des bords de retenue (76, 78) sont formés à l'intérieur de la partie rapportée (32), en se raccordant au cône intérieur (16), sous forme de butée terminale axiale pour la bague de serrage (8).

20. Dispositif de raccordement selon la revendication 19,
**caractérisé en ce que** sont formés des premiers bords de retenue (76) dans la zone des bras élastiques (40) et des second bords de retenue (78) dans les zones se trouvant entre les bras élastiques (40), les premiers bords de retenue (76) étant décalés par rapport aux seconds bords de retenue (78) en direction du cône intérieur (16), d'un écart axial (X) tel qu'en cas d'application d'une force (F_{Z}) agissant dans le sens du retrait du tuyau rigide (6), la bague de serrage (8) vient tout d'abord en application uniquement sur les premiers bords de retenue (76) et que les bras élastiques (40) sont ainsi soumis à l'influence d'une composante de la force de retenue (F_{H}) agissant radialement vers l'extérieur.
